# EUROPEAN PATENT SPECIFICATION

(11) **EP 2 564 182 B1**
(45) Date of publication and mention of the grant of the patent: **14.11.2018**
(21) Application number: 11774482.1
(22) Date of filing: 26.04.2011
(51) Int. Cl.: G01N 21/3559, G01N 21/3563, G01N 33/34, G01N 21/359

(54) **MEASUREMENT OF A PROPERTY OF A PAPER OR BOARD WEB CONTAINING GYPSUM**
MESSUNG EINER EIGENSCHAFT EINER GIPSHALTIGEN PAPIER- ODER KARTONBAHN
MESURE D'UNE PROPRIÉTÉ D'UNE BANDE DE PAPIER OU CARTON CONTENANT DU GYPSE

(30) Priority: 26.04.2010 FI 20105452
(43) Date of publication of application: 06.03.2013
(73) Proprietor: Valmet Automation Oy, 02150 Espoo (FI)
(72) Inventor: MÄNTYLÄ, Markku, FI-02150 Espoo (FI)
(74) Representative: Kolster Oy Ab
(86) International application number: PCT/FI2011/050374
(87) International publication number: WO 2011/135179

(56) References cited:
- GB-A- 1 332 581
- US-A1- 2003 047 135
- US-A1- 2005 106 312
- US-A1- 2010 078 139
- CHEN Y ET AL: "Facile synthesis and properties research of single crystal calcium sulfate nanotubes through reverse micelle method", COLLOIDS AND SURFACES A: PHYSIOCHEMICAL AND ENGINEERING ASPECTS, ELSEVIER, AMSTERDAM, NL, vol. 325, no. 1-2, 15 July 2008 (2008-07-15), pages 33-37, XP023180603, ISSN: 0927-7757, DOI: 10.1016/J.COLSURFA.2008.04.041 [retrieved on 2008-05-01]
- LIU Y. ET AL: 'Raman, MIR, and NIR spectroscopic study of calcium sulfates: gypsum, bassanite, and anhydrite, paper 2128' 40TH LUNAR AND PLANETARY SCIENCE CONFERENCE 2009 23 March 2009 - 27 March 2009, THE WOODLANDS, TEXAS, XP008162637
- ANBALAGAN G. ET AL: 'Infrared, optical absorption, and EPR spectroscopic studies on natural gypsum' VIBRATIONAL SPECTROSCOPY vol. 50, 2009, pages 226 - 230, XP026139890
- CLOUTIS E.A. ET AL: 'Detection and discrimination of sulfate minerals using reflectance spectroscopy' ICARUS vol. 184, 2006, pages 121 - 157, XP025609602

## Description

### Field

The invention relates to property measurement of a paper or board web containing gypsum.

### Background

A gypsum pigment is used in paper coating for modifying paper surface properties, such as brightness, gloss, smoothness or roughness. For the user of paper the use of gypsum in paper is revealed in general visual appearance and tactile feel. In addition, gypsum is relatively light, which enables manufacturing of paper which is of high quality yet light.

Even though the gypsum is an excellent coating substance and also a possible filler, it causes problems in paper making because of crystal water contained therein. When water content in paper under process is measured optically by IR spectroscopic methods, for instance at wavelength of 1940 nm, both crystal water and the paper's free moisture, not absorbed in the crystal, affect the optical measurement and hence the crystal water adds to the total water content in the paper with its own amount, even though the crystal water should not be taken into account as water in the moisture measurement. Patent document US2005/106312 presents a method and an apparatus for measuring amount of coating on paper web. Patent document US2003/047135 presents a method and an apparatus for measuring coating. Patent document US2010/078139 presents a method of correcting gypsum crystal water effect on infrared moisture measurement. Y. Chen and Q. Wu, Colloids and Surfaces A: Physicochem. Eng. Aspects 325 (2008), pp. 33-37 shows an FT-IR spectrum of gypsum and assigns the broad band centered at 3319 cm to hydrogen bonded O-H stretching vibration arising from crystal water.

Attempts have been made to assess the amount of crystal water on the basis of how much gypsum pigment was added to the paper, and thus to adjust the water content in the paper making process. But, in particular, when paper is made completely or partly from recycled reject, in which the amount of gypsum is unknown, the assessment does not lead to a correct result or process control, which deteriorates the quality of paper obtained as a final product. Hence, there is a need for an appropriate water content measurement performed on paper whose manufacture involves gypsum.

### Brief description

The object of the invention is to provide an improved solution for measurement. This is achieved by an optical measuring system for measuring a property of a moving paper or board web. The optical measuring system is defined in claim 1.

A control system comprising said optical measuring system is defined in claim 10.

**A** measuring method for measuring a property of a moving paper or board web containing gypsum is defined in claim 11.

Preferred embodiments of the invention are defined in the dependent claims.

Several advantages are achieved by the measuring device and the method of the invention. The amount of crystal water of gypsum may be measured and discriminated from the amount of free water.

### List of figures

The invention will now be described in greater detail by means of preferred embodiments and with reference to the accompanying drawings, in which:
Figure 1 shows a paper machine,
Figure 2 shows a principle of measuring arrangement,
Figure 3 shows a measuring arrangement, in which measurements are performed at several web points,
Figure 4A shows how radiation is divided into wavelength bands for detection,
Figure 4B shows an LVF filter as a dispersive component in the measuring arrangement,
Figure 4C shows a measuring arrangement employing beamsplitters,
Figure 4D shows modulated IR radiation sources,
Figure 5 shows transmittance spectra of gypsum-free paper, gypsum and water,
Figure 6 shows transmittance spectra of gypsum-free paper and gypsum-containing paper,
Figure 7 is an enlargement of absorption bands of free water and crystal water of gypsum, and
Figure 8 shows a flow chart of the method.

### Description of embodiments

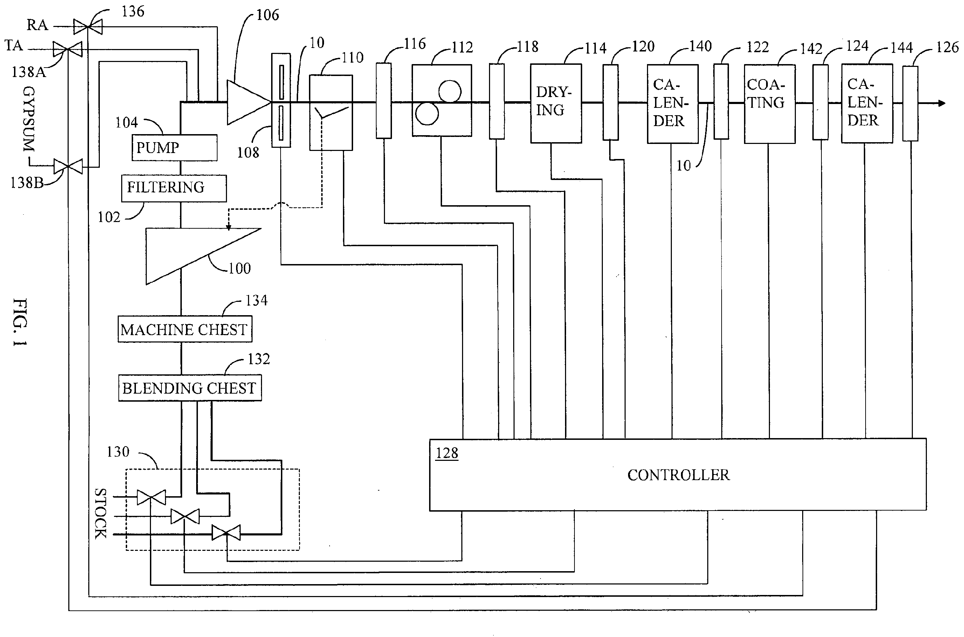

Figure 1 shows the structure of a paper machine in principle. One or more stocks are fed onto a paper machine through a wire pit silo 100, which is usually preceded by a blending chest 132 for partial stocks and a machine chest 134. The machine stock is dispensed for a short circulation, for instance, controlled by a basis weight control or a grade change program. The blending chest 132 and the machine chest 134 may also be replaced by a separate mixing reactor (not shown in Figure 1), and the dispensing of the machine stock is controlled by feeding each partial stock separately by means of valves or another flow control means 130. In the wire pit silo 100, water is mixed into the machine stock to obtain a desired consistency for the short circulation (dashed line from a former 110 to the wire pit silo 100). From the obtained stock it is possible to remove sand (centrifugal cleaners), air (deculator) and other coarse material (pressure filter) using cleaning devices 102, and the stock is pumped with a pump 104 to a headbox 106. Before the headbox 106, it is possible to add to the stock, in a desired manner, a filler TA, including e.g. gypsum, kaolin, calcium carbonate, talcum, chalk, titanium dioxide and diatomite etc. and/or a retention agent RA, such as inorganic, inartificial organic or synthetic water-soluble organic polymers. The filler makes it possible to improve the formation, surface properties, opacity, brightness and printability as well as to reduce the manufacturing costs. The retention agents RA, in turn, increase the retention of the fines and fillers while speeding up dewatering in a manner known per se. Both the fillers and the retention agents thus affect the structural properties, optical properties and surface smoothness as well as topography of the paper.

From the headbox 106 the stock is fed through a slice opening 108 of the headbox to a former 110, which may be a fourdrinier wire or a gap former. In the former 110, water drains out of the web 10 and additionally ash, fines and fibres are led to the short circulation. In the former 110, the stock is fed as a web 10 onto a wire, and the web 10 is preliminary dried and pressed in a press 112. The web 10 is actually dried in driers 114. In general, there is at least one measuring part 116 to 126 that allows measurement of, e.g. basis weight, moisture, thickness and surface properties, such as topography, of the web 10.

The paper machine, which in connection with this application refers to paper or board machines, may also include a pre-calender 140, a coating section 142 and/or a finishing calender 144. It is not necessary to have the coating section 142, however, and therefore it is not necessary to have more calenders 140, 144 than one. In the coating section 142, coating paste, which may contain e.g. gypsum, kaolin, talcum or carbonate, starch and/or latex, may be spread onto paper. The use of coating paste generally reduces the roughness of paper and increases glossiness and improves print quality.

In calenders 140, 144, where the uncoated or coated paper or board web runs between the rolls pressing with desired force, it is possible to change the surface properties of the paper, such as smoothness, roughness, topography, gloss and the like. The calender 140, 144 may also affect the paper thickness. In the calender 140, 144, the properties of the paper web may be changed by means of web moistening, temperature and nip pressure between the rolls such that the higher the pressure exerted on the web the smoother and glossier the paper will be. Moistening and elevated temperature further reduce roughness and increase glossiness. In addition to this, it is clear that the operation of a paper machine is known per se to a person skilled in the art, and therefore, it need not be presented in greater detail in this context.

Figure 1 also shows a control arrangement of a paper machine. Factors affecting the quality and grade change include, inter alia, the number and mutual proportion of partial stocks, the amount of filler, the amount of retention agent, machine speed, the amount of white water and drying capacity. The controller 128 may control the dispensing of partial stocks by means of valves 130, the dispensing of each filler TA by means of the valve 138A to 138B, the dispensing of the retention agent RA by means of the valve 136, adjust the size of the slice opening 108, control the machine speed, control the amount of white water and the drying process in block 114. The valve 138A may be a valve controlling the dispensing of gypsum. The controller 128 utilizes sensors 116 to 126 for measuring the web 10. The controller 128 may also measure the properties of the web 10 elsewhere (e.g. at the same locations where controls are performed).

The gypsum is calcium sulphate that occurs as a dihydrate at room temperature. The chemical formula is thus CaSO₄ + 2H₂O, where 2H₂O means crystal water contained in the gypsum. At room temperature crystal water amounts to 20.92% by weight. When gypsum is dried at the temperature of about 40 to 120°C, the gypsum becomes a hemihydrate (CaSO₄ + 1/2H₂O) whose water content is about 6.2%. If the gypsum is further dried at a higher temperature than this, the gypsum becomes an anhydrite (CaSO₄) with no crystal water at all. In a situation where paper and board are measured on the production machine, the gypsum is usually a dihydrite. The use of gypsum is on the increase, and often calcium carbonate, kaolin and talcum are to be replaced thereby. The recent increased use of gypsum is a result, for instance, of the fact that both the shape and size and the crystal structure of the gypsum pigment particles have been developed such that gypsum is well suited for a paper coating pigment, for instance.

The controller 128 may be conceived as a paper machine's control arrangement, or part thereof, based on automatic data processing. The controller 128 may receive digital signals or convert the received analog signals to digital ones. The controller 128 may comprise a microprocessor and memory and execute the signal processing in accordance with an appropriate computer program. The operating principle of the controller 128 may be, for instance, PID (Proportional-Integral-Derivative), MPC (Model Predictive Control) or GPC (General Predictive Control) control.

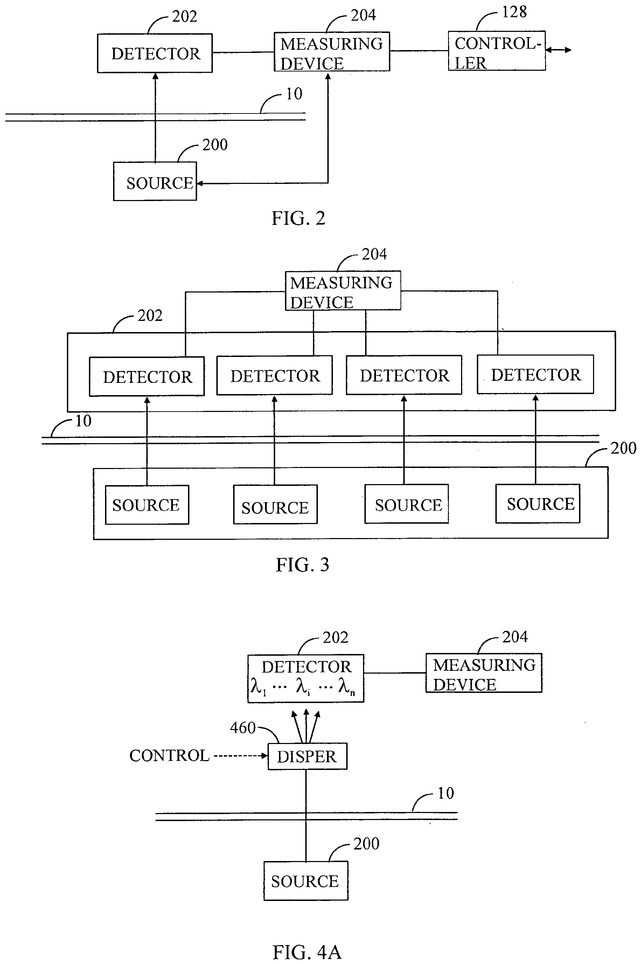

Optical measuring of the web 10 is now examined by means of Figure 2. The measuring system may comprise a source 200 of infrared radiation, at least one detector 202 and a measuring device 204. The source 200 of infrared radiation may direct radiation of infrared zone to the web 10. Infrared radiation may be NIR (Near InfraRed) radiation having a wavelength range of about 750 nm to 2500 nm. The source 200 of infrared radiation may comprise one or more narrowband or broadband components emitting infrared radiation. The narrow band may be, for instance, tens of nanometres wide or so narrow that the infrared radiation can be defined monochromatic. The source 200 of infrared radiation may comprise one or more leds (Light Emitting Diode), lasers, incandescent lamps, gas-discharge lamps or the like. Between the broadband source and the detector there may also be several filters having a narrow passband. The filters may be placed in a rotary filter disc, for instance.

Each detector 202 detects the infrared zone radiation that has been in interaction with the web 10 and that originates from the source 200 of the infrared radiation. The interaction may mean that infrared radiation permeates the web 10, whereby the intensity of infrared radiation attenuates wavelength selectively. The interaction may also mean that infrared radiation reflects or scatters from the web 10, whereby the intensity of infrared radiation also attenuates wavelength selectively.

The detector 202 may comprise one or more detecting elements. The detector 202 may comprise detecting elements in line or matrix formation. The detector 202 may comprise a part that spreads different wavelengths of infrared radiation into a spectrum such that at least two detecting components detect different wavelength bands. The part spreading radiation into a spectrum may comprise a prism, a lattice or an optical filter structure, for instance. The optical filter structure may comprise, for instance, an LVF (Linear Variable Filter), whose operation may be based on the thickness of a membrane changing in a wedge-like manner, for instance. The changing membrane thickness changes the pass wavelength of the LVF filter, which may be utilized in detection to separate different wavelength bands. The spectrum indicates the intensity or attenuation of radiation as a function of the wavelength. The spectrum may be discrete or continuous. In order to measure attenuation, the intensity of infrared radiation originating from the source 200 may be measured and compared, for instance, by proportioning it with the intensity of infrared radiation measured after interaction. Thus, the measuring device 204 may receive data on the spectrum of infrared radiation emitted by the source 200 so as to calibrate the spectrum of radiation having interacted with the paper according to the infrared radiation of the radiation source 200.

For measuring the spectrum the detector 202 may comprise, for instance, a spectrometer, which may be e.g. a lattice spectrometer, FTIR (Fourier Transforms InfraRed) spectrometer, AOTF (Acousto-Optical Tunable Filter) spectrometer or Fabry-Perot spectrometer. The part spreading infrared radiation into a spectrum is not necessary, however, if the web 10 is illuminated with narrowband components and the different narrowband radiations that have interacted with the web 10 are separated from one another time and space divisionally.

For measurement data the measuring device 204 may apply, for instance, the main component analysis and regression, in which the main components of data may be solved by singular value decomposition (SVD), eigenvalue decomposition (EVD) or another suitable sequential algorithm. The main component analysis reduces data noise, and the object is to find in the measured data one or more important, and possibly latent, variables that explain the variation in data. Less important components, whose significance will remain below a predetermined threshold value, may be ignored in the main component analysis. This reduces the amount of components and data to be processed. In this application, the data is searched for a component produced by the crystal water of gypsum. The data may be processed in vector or matrix form, and in the main component analysis it is possible to maximise the variance, i.e. statistical dispersion, of the data matrix, which gives as a result the eigenvalues of dispersion matrix of the data. In that case the data components may be configured in order according to their eigenvalues. The data components may explain the spectral form, and each component may explain the spectral form of a specific wavelength range, for instance.

Figure 3 shows an embodiment which employs a plurality of infrared sources 200 and a plurality of components of the detector 202. Different infrared sources 200 may direct a predetermined, narrow infrared band to different parts of the web 10, and after passing through the web each infrared band hits one detector 202. The detectors 202 feed a signal based on the detected infrared signal to the measuring device 204.

Figure 4A shows an embodiment, in which a component 460 dispersing optical radiation, such as a spectrograph, a prism or a lattice, directs different wavelength bands to the detector 202. The dispersing component 460 may operate without control, or it may be controllable (Figure 4A depicts a control signal in a dashed line) such that the dispersing component 460 may direct different wavelength bands to the detector 202 according to control. The detector 202 may comprise one or more detecting elements, each of which may detect one wavelength band directed thereto. The detector 202 may be a line detector, for instance. On the basis of the received control, the dispersing component 460 may adjust one or more wavelength bands to be directed to the detector 202.

When the detector 202 comprises more than one element, from the elements of the detector 202 it is possible to select the desired one or more elements to feed to the measuring device 204 the signal(s) corresponding to the desired one wavelength band λⱼ or more wavelength bands λⱼ - λₖ

The wavelength bands λⱼ - λₖ need not form a continuous spectrum, but they may also be separate wavelength bands.

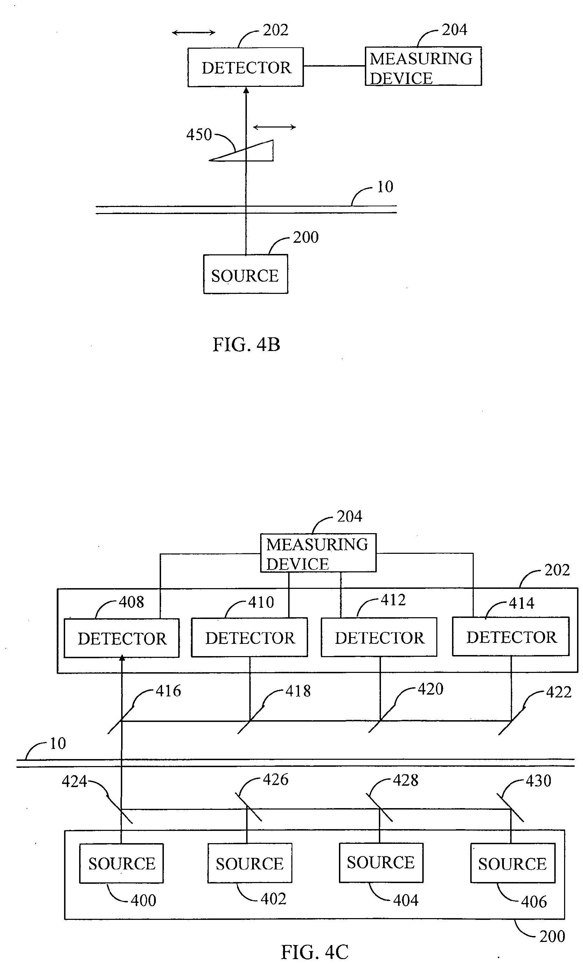

Figure 4B shows an embodiment which employs an LVF filter 450. When the infrared radiation from the infrared source 200 permeates the web 10, it hits the LVF filter 450. If there is one detector 202 in use, the LVF filter 450 may be moved in the direction of the wedge-like structure of the LVF filter 450, whereby different wavelength bands fall onto one element of the detector 202 at different times. Instead of or in addition to moving the LVF filter 450 the one-element detector 200 may also be moved in the direction of the wedge-like structure of the LVF filter 450, whereby different wavelength bands fall onto one element of the detector 202 at different times. If there are several detecting elements, several wavelength bands may be detected simultaneously. Whereas, if the detector 202 comprises a sufficient number of detecting elements in a row (or in matrix), it is possible for the detector 202 to detect several wavelength bands simultaneously in the direction of the wedge-like structure of the LVF filter 450 without moving the detector or the filter.

Figure 4C shows an embodiment, which employs several narrowband infrared sources 400 to 406 and several detectors 408 to 414 that are similar to the detectors 202 of Figure 3. Each infrared source 400 to 406 may transmit at a different wavelength band. The radiation emitted by the infrared source 402 to 406 may be directed to beam despreaders 426 to 428 and a reflector 430. The radiation emitted by the infrared source 400 may be directed to a beam despreader 424, which combines the infrared radiation of other infrared sources 402 to 406 reflected from the beam despreaders 426 to 428 and the reflector 430 with the infrared radiation of the infrared source 400. Thus, the infrared radiation emitted by all infrared sources 400 to 406 may be directed to the same point in the web 10.After the infrared radiation has passed through the web 10, the infrared radiation hits a beam separator 416, which allows the infrared band of one source 400 to 406 to pass through and reflects the infrared bands of other infrared sources 402 to 406 towards beam separators 418 and 420 and a reflector 422.Both beam separators 418 and 420 reflect one infrared band to a detector 410 and 412 and passes one infrared band to a reflector 422, which reflects the arrived infrared band to a detector 414.The separators 416 to 420 act as filter structures, corresponding to the LVF filter 450, to separate different wavelength bands for detection. The detectors 408 to 414 feed a signal based on the detected infrared signal to the measuring device 204.

The reflectors may comprise a mirror, a prism or the like. The beam despreader and the beam separator may comprise a beam distributor. The beam distributors make it possible to direct the different bands of infrared radiation to the same point in the web also when measuring infrared radiation reflecting from the web 10.

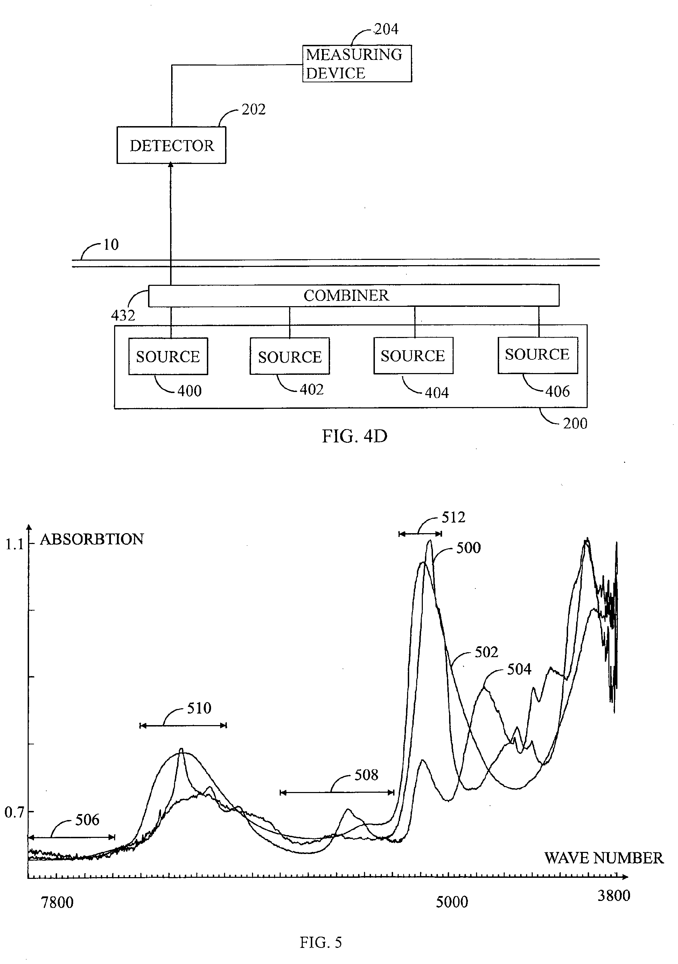

Figure 4D shows an embodiment, in which each infrared source 400 to 416 may transmit at a different wavelength band. Each infrared source 400 to 416 is modulated in a different manner such that the wavelength bands of the different infrared sources 400 to 416 are separable from one another in reception. For instance, different pulsing frequencies may be used as modulation, whereby different wavelength bands are separable frequency divisionally. The pulsing frequencies may be orthogonal frequencies, for instance. The combiner 432, which may be any one of the above-described components, an optical fibre or fibre bundle, an optical conductor or another optical combiner, combines the radiation emitted by the different infrared sources 402 to 406 and directs the combined radiation to the same point in the web 10. From the web 10 the infrared radiations are directed to one detector 200 that feeds the detected infrared radiations to the measuring device 204. The measuring device 204 may distinguish between the signals of different infrared sources on the basis of modulation.

Figure 5 shows absorption spectra of water, gypsum and gypsum-free paper containing free water from wave number 8000 to wave number 3800, i.e. from wavelength of 1250 nm to wavelength of 2631 nm. The vertical axis represents intensity of attenuation A on a freely selected scale and the horizontal axis represents wave number k, the unit of which is cm⁻¹. It can be seen from Figure 5 that the absorption curve 500 of gypsum, the absorption curve 502 of free water and the absorption curve 504 of paper containing free water are different in shape, but they have approximately the same values, for instance, in the areas 506, 508 of the wave numbers 7600 (1315 nm) and 5800 (1724 nm). Correspondingly, for instance in the areas 510, 512 of the wave numbers 6900 (1449 nm) and 5100 (1960 nm) the attenuation values and curve shapes differ clearly from one another. The differences result, i.a., from the crystal water of gypsum. In areas 510, 512 (wave number ranges from 6600 to 7200 and from 4800 to 5400), the gypsum and the paper containing free water, however, have in common that their absorption bands overlap with those of free water. Thus, the measuring of gypsum and crystal water of gypsum may be performed on the absorption band of free water, because there is at least one feature that distinguishes the absorption of free water from the absorption of crystal water.

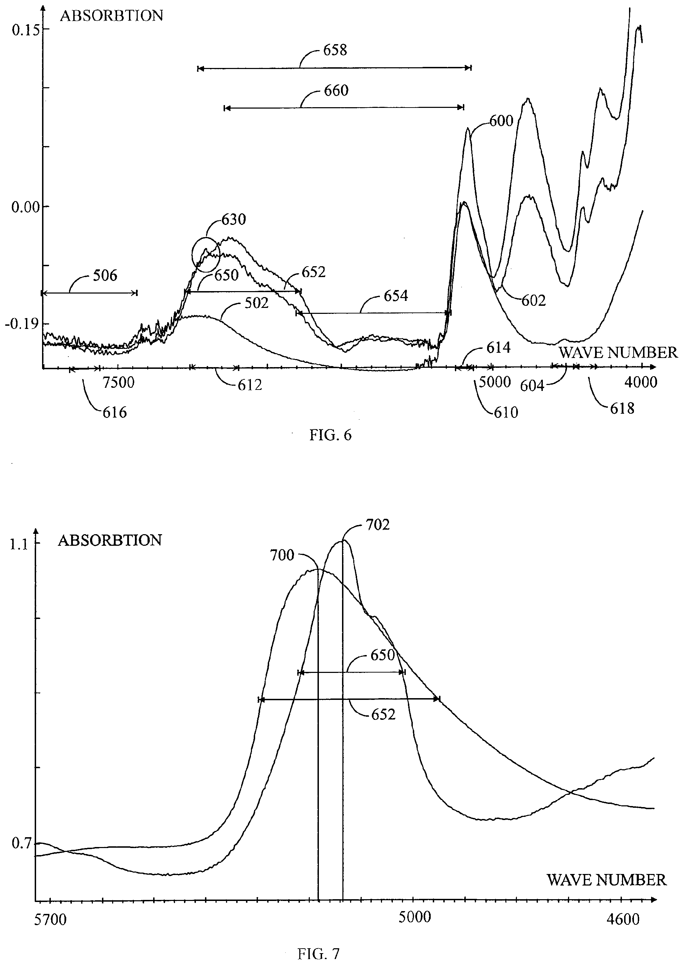

Figure 6 shows the absorption spectra of a moisture film, conditioned, gypsum-free paper and conditioned, gypsum-containing paper from wave number 8000 (1250 nm) to wave number 4000 (2500 nm). The vertical axis represents intensity of attenuation A on a freely selected scale and the horizontal axis represents wave number k. It appears from Figure 6 that the absorption curve 600 of the gypsum-containing paper follows rather well the absorption curve 500 of gypsum and deviates in the area of certain wave numbers from the absorption curve 502 of free water and from the absorption curve 602 of the conditioned, gypsum-free paper, even though the absorption bands of the gypsum-containing paper and the absorption bands of free water overlap per se. On the other hand, the absorption curve 600 of the gypsum-containing paper and the absorption curve 602 of the conditioned, gypsum-free paper behave in the same manner, for instance, in the area 508 of wave number 5700 (1754 nm).

The operation of the measuring device is now examined by means of Figures 5 and 6. The measuring device 204 receives data on at least one wavelength band 610, 612 of infrared radiation having been in interaction with the web 10, whereby the crystal water of gypsum produces in the spectrum at least one feature that is characteristic to gypsum crystal water. Each said feature characteristic to crystal water deviates from a spectral feature characteristic to free water, even though the feature appears on the absorption band of free water. The data may be included in a signal provided by one detector or a signal provided by several detectors, or the data may be part of a signal provided by one or more detectors. For instance, in the area 512 of wave number 5100 attenuation caused by the crystal water of gypsum is locally at its most intense. For gypsum alone the local attenuation peak is at about 1950 nm. The attenuation of free water is also locally at its most intense in the area 512 of wave number 5100, but the attenuation peak is at a slightly larger wave number, corresponding approximately the wavelength of 1930 nm. At the same time, when the absorption peak of water moves on a wavelength scale towards a larger wavelength, attenuation of the absorption peak also increases. Thus, the measuring device 204 may determine a variable dependent on the amount of gypsum in the web by means of a measured feature that may relate to attenuation or wavelength. The feature that is measured may be, for instance, wavelength of spectral attenuation local maximum, intensity of attenuation on measured wavelength bands, bandwidth of local absorption peak, distance of local absorption peak bands from one another, spectral shape or the like on measured wavelength bands 610, 612, 614, 616, 618.

The measuring device 204 determines, based on data on at least one of the spectral features characteristic to the crystal water of gypsum, at least one of the following properties of the web 10: amount of gypsum, proportion of gypsum, amount of gypsum crystal water, proportion of gypsum crystal water, weight of water corrected with gypsum crystal water, proportion of free water, dry weight corrected with the amount of gypsum crystal water, proportion of dry matter corrected with the proportion of gypsum crystal water. The proportion of free water refers to the same as percentage of moisture. Each feature of free water reference may be known in advance, or the feature may be measured.

In an embodiment, the measuring device 204 may receive, as reference, data on at least one wavelength band 614, 616, 618 of infrared radiation that has interacted with the web 10, on which wavelength band free water produces a spectral feature that deviates from the spectral feature characteristic to gypsum crystal water. Said spectral feature on the wavelength band may be characteristic to free water. For instance, wavelength bands in the areas 506, 508, 604 of wave numbers 7500, 5700 and 4500 could be suitable for measuring free water features deviating from the spectral feature characteristic to gypsum crystal water.

In an embodiment, the feature to be measured may be intensity of attenuation. In that case intensities of attenuations may be measured on wavelength bands 612 and 616, for instance. On wavelength band 612 there is a measureable difference in the intensity of attenuation between the gypsum-containing paper 600 and the gypsum-free paper 602, whereas on wavelength band 616 the attenuation is the same within the limits of measurement accuracy. Because it is possible to know in advance how the attenuation of gypsum-free paper behaves, it is also possible to detect the difference 630 in attenuations. It is possible to estimate the attenuation of gypsum-free paper on wavelength band 612 by utilizing the measurement of wavelength range 616 and a previously known reference based on free water, whereafter it is possible to calculate, for instance, the mutual deviation of the estimated attenuation and the attenuation measured on wavelength band 612 by means of an operation. The deviation includes information on gypsum or crystal water of gypsum. The reference based on free water may be a spectrum based on measurement of moisture film or a spectrum of gypsum-free paper. The use of reference provides proportion information for the attenuation of gypsum. The operation used may be one or more basic calculation operations, elementary functions, advanced functions or a combination thereof. The operation may comprise a statistical method. Examples of simple operations include a difference or a quotient, for instance.

It is also possible to obtain a deviation between the attenuation intensity A1 of wavelength band 612 and the attenuation intensity A2 of wavelength band 616 without estimation by means of a suitable operation O (A1, A2). Also in this case the operation O used may be one or more basic calculation operations, elementary functions, advanced functions or a combination thereof. The operation O may comprise a statistical method and the arguments of the operation O may include more than two attenuation intensities. For the sake of clarity, also in this case the operation O may be assumed to be a difference or a quotient. After this, e.g. the amount or proportion of gypsum crystal water can be determined on the basis of how the result of the operation (e.g. difference or ratio) relates to a predetermined threshold. The threshold may correspond to performance of an operation by using as arguments A1 and A2 the attenuation of gypsum-free paper on measured wavelength bands 612, 616 or the attenuation of gypsum-containing paper comprising a predetermined amount of gypsum. A corresponding comparison of operation results also applies on other wavelength bands.

Now, let us examine Figure 7 that shows one absorption band of water. The wavelength of the local maximum of attenuation of gypsum-containing paper depends on the amount of gypsum in the paper. If there is no gypsum in the paper, the local maximum 700 of attenuation falls on the wavelength defined by free water, i.e. at about 1930 nm. If it is assumed that the paper contains so much gypsum that the measurement corresponds to that of pure gypsum, with no free water in the paper, the only water being that of gypsum crystal water, the local maximum 702 of attenuation falls onto about 1950 nm. When more and more gypsum is added to the paper, the local maximum of attenuation moves from wavelength of 1930 nm, as a function of the amount of gypsum, towards wavelength of 1950 nm. Accuracy of measurement depends on resolution, which may be based on separation of wavelengths in reception or on bandwidths of infrared bands to be directed to the web. The resolution may be higher than 10 nm, for instance.

As limit values for a function determining the amount of gypsum it is thus possible to set the following conditions f⁻¹(0) = 1930 nm and f⁻¹ (1) = 1950 nm, where f is a function, which gives as a result e.g. the amount of gypsum when the wavelength is an argument, f⁻¹ denotes an inverse function, argument 0 denotes that there is no gypsum, and argument 1 denotes pure gypsum. Function f may also be proportion of gypsum, amount of gypsum crystal water, proportion of gypsum crystal water, weight of water corrected with gypsum crystal water, proportion of free water, dry weight corrected with the amount of gypsum crystal water, proportion of dry matter corrected with the proportion of gypsum crystal water or the like. Function f may be linear or nonlinear, and it may be determined by measurements, in which gypsum has been added to the paper in predetermined amounts. Transfer of the local maximum of attenuation in relation to the wavelength does not necessitate a reference measurement on a wavelength band where crystal water of gypsum does not cause deviations in the absorption spectrum of free water, but it is possible to rely on the previously known data on the attenuation of free water. If the local attenuation maximum of the web 10 falls onto the wavelength of 1940 nm, for instance, the function f allows formation of the proportion of gypsum in the web, for instance, using value 1940 nm as an argument, and thus it is possible to obtain f(1940 nm) = 10%, for instance.

Additionally or alternatively, the measuring device 204 may determine, as a measurable feature, the bandwidth 650 of a local absorption band caused by the crystal water of gypsum in relation to the wavelength or the wave number. The bandwidth may be measured, for instance, as half-value width, or a threshold may be set for bandwidth measurement at another intensity level of attenuation. For instance, in Figure 6 the bandwidth 650 of the absorption band in the area of wave number 6900 depends on the gypsum such that as the amount or proportion of gypsum water increases the absorption band becomes narrower. A corresponding phenomenon appears also in other areas of local attenuation peaks characteristic to gypsum water. The width of the local absorption band 650 having been measured, it may be compared with either measured or previously known bandwidth 652 of free water reference. The mutual deviation in bandwidths indicates information on gypsum in the web 10.

A corresponding measurement may also be performed between local attenuation bands, i.e. on a transmittance band 654.

In an embodiment the measuring device forms an integral of the spectrum from the first wavelength to the second wavelength. In that case the object may be to determine the surface area of an attenuation band. In that case the value of the first wavelength and the second wavelength may be determined by attenuation or transmittance exceeding a predetermined value on said wavelengths. The predetermined value may be set such that it is approximately at the half-value width of the attenuation band or at another desired point. The threshold value of increasing attenuation and the threshold value of decreasing attenuation may also differ from one another. The first wavelength and the second wavelength may also be predetermined, e.g. 1850 nm and 2000 nm.

Further, the measuring device 204 may measure a distance 658 between two or more local attenuation peaks caused by gypsum in relation to the wavelength or the wave number. The distance between attenuation peaks changes according to addition of gypsum or gypsum water. The distance 658 between the local peaks having been measured, it may be compared with either the measured or the previously known distance 660 between the peaks of free water reference. Mutual deviation in distances between the peaks of free water reference and gypsum includes information on gypsum and its crystal water.

Additionally or alternatively, the shape of spectral curve of the web 10 may be a feature to be utilized in the determination of gypsum or crystal water contained therein. The measuring device 204 may include a filter sensitive to curve shape. The filter may produce a value indicating the larger amount of gypsum the more the spectral shape resembles that of pure gypsum or gypsum-rich paper or board. Correspondingly, the filter may produce a value indicating the larger amount of gypsum the less the spectral shape resembles that of free water or gypsum-free paper or board. The filter, which may be implemented as an algorithm in the measuring device 204, may be a kind of adapted filter whose operation may be generally described, for instance, such that each measured attenuation value may be multiplied by a wavelength-specific weighting value, and the weighted attenuation values may be summed up. For instance, each weighting value of the adapted filter based on free water reference may depend on the spectral values of free water on a measured wavelength band. Correspondingly, the weighting values of an adapted filter tuned according to gypsum may depend on the spectral values of gypsum reference on a measured wavelength band. Thus, the filter output may directly detect in the web 10 the amount of gypsum, proportion of gypsum, amount of gypsum crystal water, proportion of gypsum crystal water, weight of water corrected with gypsum crystal water, proportion of free water, dry weight corrected with gypsum crystal water, proportion of dry matter corrected with gypsum crystal water.

In an embodiment, one or more wavelength bands including one or more spectral features characteristic to gypsum crystal water but deviating from those of free water may be measured accurately with a spectrograph. In a way the spectrograph is zoomed to one or more wavelength bands sensitive to the effect of gypsum crystal water so as to find even minor deviations. Spectrographic measurement may be performed on a wavelength range of 1885 nm to 2000 nm, for instance. In that case spectral inaccuracy may be less than 1 nm. In addition to this, it is possible to measure one or more wavelength bands, on which free water produces at least one spectral feature characteristic to free water, by using one or more interference filters, for instance. In that case free water reference may be measured from one or more narrow bands, which may be less than 10 nm. Measurement of the free water reference may be performed, for instance, on wavelengths of 1750 nm and 2085 nm or other wavelengths found appropriate. Thus, the measurement may be simplified and operation may be focused on accurate measurement of the spectrum of gypsum crystal water.

In addition to the above-described linear models of mainly one variable, it is also possible to use statistical multivariable methods commonly known in chemometry for solving the proportion of crystal water of gypsum on the basis of spectral information. In chemometric multivariable methods calibration refers to a process, which determines correlations between the outputs of the measuring device (e.g. spectral features) and the measured concentrations.

When the paper to be measured simultaneously contains both free water and gypsum crystal water, which at least partly absorb on the same wavelength range, the problem may be solved by means of statistical methods of multiple variables. Known modelling methods include, for instance, PCA (Principal Component Analysis), PLS (Partial Least Squares regression) and PCR (Principal Component Regression).

The measuring device 204 may have determined the proportion of gypsum to be c (e.g. 10%) of the web. It is also possible to know in advance the proportion of gypsum crystal water cw, which may be 20.92% of the gypsum mass, for instance. This makes it possible to obtain the proportion of the gypsum crystal water in the web ccw, which is c*cw, i.e. in this example 2.092%. Thus, it is possible to correct the free water proportion fw' (e.g. 6%) of the web, determined in a separate measurement, with the proportion of gypsum crystal water by subtracting from the measured free water proportion fw' the proportion of gypsum crystal water ccw. Thus, the actual proportion of free water fw in the web is fw' - ccw, i.e. 6.0% - 2.092% = 3.908%. Correspondingly, the dry weight is increased by the amount of gypsum crystal water. Seen from another viewpoint, it may be assumed, for instance, that the basis weight of the paper is 100 g/m². The actual moisture may be assumed to be 5%, which means that the weight of water is 5 g/m². The dry mass is thus 95 g/m². If the proportion of gypsum is 10% of the dry mass, its amount is 9.5 g/m². Assumed that the proportion of gypsum crystal water is 20.92%, the amount of crystal water obtained is 1.987 g/m². If the amount of water in paper were measured optically without crystal water correction, the weight of water would be 5 g/m² + 1.987 g/m² = 7.987 g/m², which is equal to an error of approximately 40% in the measurement of weight of water.

In an embodiment the measuring device 204 may determine, for instance, the amount or proportion of a filler on the basis of the already determined amount of gypsum or proportion of gypsum, if the proportion of gypsum in the filler is known. For instance, if the proportion of gypsum in the web is 10%, and 30% of the filler is gypsum, the proportion of the filler is (10%)/(30%) = 33%.

In an embodiment the measuring device 204 may determine, for instance, the amount or proportion of coating on the basis of the already determined amount of gypsum or proportion of gypsum, if the proportion of gypsum in the coating substance is known. For instance, if the proportion of gypsum in the web is 5%, and 50% of the coating substance is gypsum, the proportion of the coating substance is (5%)/(50%) = 10%.

A paper and/or board machine may comprise a control system for controlling the manufacturing process of paper or board. The control system comprises the above-described measuring device 204 and a controller 126, which receives data on the determined at least one property of the web 10 determined by the measuring device and controls the manufacturing process of the paper or board on the basis of the data. A controller 128 may adjust the ash content on the paper or board machine by controlling a valve 138A to add gypsum feed, to maintain gypsum feed the same or to reduce gypsum feed. Correspondingly, the controller 126 may control one or more valves 138B and adjust the amount of other fillers in the paper or board.

The controller 128 may also control the total moisture of the web accurately, because the crystal water of gypsum may be separated from the free water. In that case it is possible to measure the moisture in base paper before the coating section 142 and the moisture in coated paper in or after the coating section 142. If gypsum is used for coating, the amount of crystal water thereof may be taken into account in measurements, however, and the moisture in paper or board may be controlled.

In addition, the controller 128 may control the moisture in the final product. Thus, it is possible to avoid overdrying of the paper or board to be manufactured, for instance, which may occur if the amount of gypsum c rystal water is not known.

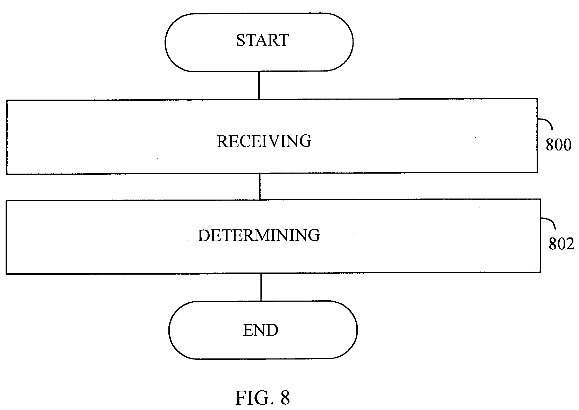

Figure 8 shows a flow chart of a method. In step 800, data is received on at least one wavelength band of infrared radiation that has been in interaction with the web 10 and that contains one or more spectral features characteristic to gypsum crystal water but deviating from those of free water. In step 802 is determined the web property depending on the gypsum crystal water, on the basis of the data on the at least one spectral feature characteristic to the gypsum crystal water.

The method shown in Figure 8 may be implemented as a logic circuit solution or computer program. The computer program may be stored on a computer program distribution medium for distribution. The computer program distribution medium is readable by a data processing device and encodes computer program instructions for controlling the operation of a performance measurement system.

The distribution medium, in turn, may be a medium readable by a data processing device, a program storage medium, a memory readable by a data processing device, a software distribution package readable by a data processing device, a signal readable by a data processing device, a telecommunications signal readable by a data processing device, or a compressed software package readable by a data processing device.

Although the invention is described above with reference to the examples according to the accompanying drawings, it is clear that the invention is not restricted thereto, but may be modified in various ways within the scope of the accompanying claims.

## Claims

1. An optical measuring system for measuring a property of a paper or board web containing gypsum, the system comprising a source (200) of infrared radiation, the source of infrared radiation configured to direct infrared radiation to the web (10); and at least one detector (202), each detector configured to detect near infrared radiation that has interacted with the web (10) and originates from the infrared radiation source (200) and to generate data corresponding to the detection, **characterized in that** the system further comprises a measuring device (204) configured
to receive, from the at least one detector, data on at least one spectral feature of at least one wavelength band (610, 612) of near infrared radiation that has been in interaction with the web (10), the at least one wavelength band (510, 512, 654) being an absorption band of free water and containing one or more spectral features characteristic to gypsum crystal water but deviating from those of free water; and
to determine a property of the web depending on the gypsum crystal water, on the basis of the data on the at least one spectral feature characteristic to the gypsum crystal water.

2. The system of claim 1, **characterized in that** the measuring device is configured to determine at least one of the following properties of the web (10): amount of gypsum, proportion of gypsum, amount of gypsum crystal water, proportion of gypsum crystal water, weight of water corrected with gypsum crystal water, proportion of free water, dry weight corrected with the amount of gypsum crystal water, proportion of dry matter corrected with the proportion of gypsum crystal water.

3. The system of claim 2, **characterized in that** the measuring device (204) is also configured to determine at least one of the following: amount of coating including gypsum, proportion of coating including gypsum on the basis of the measured property.

4. The system of claim 3, **characterized in that** the measuring device (204) is additionally configured to receive data on at least one spectral feature of at least one wavelength band (614, 616, 618) of the near infrared radiation that has been in interaction with the web (10), the at least one wavelength band (614, 616, 618) deviating from that of gypsum crystal water, said spectral feature being characteristic to free water, and the measuring device (204) being configured to use the received data on the at least one spectral feature of free water as a reference feature.

5. The system of claim 1, **characterized in that** the measuring device (204) is also configured to determine at least one of the following: amount of a filler, proportion of the filler on the basis of the measured property.

6. The system of claim 1, **characterized in that** the measuring device (204) is configured to determine the at least one property of the web (10) on the basis of the spectral shape information contained in the data.

7. The system of claim 1, **characterized in that** the measuring device (204) is configured to determine the at least one property of the web (10) on the basis of the attenuation information on one or more wavelengths of near infrared radiation contained in the data.

8. The system of claim 1, **characterized in that** the measuring device (204) is configured to determine the at least one property of the web (10) on the basis of the wavelength information of one or more predetermined attenuation values of near infrared radiation contained in the data.

9. The system of claim 1, **characterized in that** the measuring device (204) is configured to determine the at least one property of the web (10) on the basis of the bandwidth information on a local absorption band of near infrared radiation contained in the data.

10. A control system for use in a manufacturing process of paper or board web containing gypsum, **characterized in that** the control system comprises a controller (126) and the optical measuring system of claim 1, and
the controller (126) is configured to receive data from the measuring device (204) on the determined at least one property of the web (10) and to control the manufacturing process of the paper or board web on the basis of said web property.

11. A measuring method for measuring a property of a moving paper or board web containing gypsum, **characterized in that** the method
receives (800) data on at least one spectral feature of at least one wavelength band of near infrared radiation that has been in interaction with the web (10), the at least one wavelength band being an absorption band of free water and containing one or more spectral features characteristic to gypsum crystal water but deviating from those of free water;
determines (802) a property of the web depending on the gypsum crystal water, on the basis of the data on the at least one spectral feature characteristic to the gypsum crystal water.

12. The method of claim 11, **characterized by** determining at least one of the following properties of the web (10): amount of gypsum, proportion of gypsum, amount of gypsum crystal water, proportion of gypsum crystal water, weight of water corrected with gypsum crystal water, proportion of free water, dry weight corrected with the amount of gypsum crystal water, proportion of dry matter corrected with the proportion of gypsum crystal water.

13. A control method for a manufacturing process of paper or board web containing gypsum, **characterized in that** the control method controls the manufacturing process of the paper or board web using the control system of claim 10.

## Patentansprüche

1. Optisches Messsystem zum Messen einer Eigenschaft einer gipshaltigen Papier- oder Kartonbahn, wobei das System umfasst: eine Infrarotstrahlungsquelle (200), wobei die Infrarotstrahlungsquelle konfiguriert ist zum Richten von Infrarotstrahlung zu der Bahn (10), und wenigstens einen Detektor (202), wobei jeder Detektor konfiguriert ist zum Erfassen einer Nahinfrarotstrahlung, die mit der Bahn (10) interagiert hat und von der Infrarotstrahlungsquelle (200) ausgeht, und zum Erzeugen von Daten in Entsprechung zu der Erfassung,
**dadurch gekennzeichnet, dass** das System weiterhin eine Messvorrichtung (204) umfasst, die konfiguriert ist zum:
Empfangen, von dem wenigstens einen Detektor, von Daten zu wenigstens einer spektralen Eigenschaft wenigstens eines Wellenlängenbands (610, 612) der Nahinfrarotstrahlung, die mit der Bahn (10) interagiert hat, wobei das wenigstens eine Wellenlängenband (510, 512, 654) ein Absorptionsband eines freien Wassers ist und eine oder mehrere spektrale Eigenschaften enthält, die charakteristisch für Gipskristallwasser sind und von denjenigen des freien Wassers abweichen, und
Bestimmen einer Eigenschaft der Bahn in Abhängigkeit von dem Gipskristallwasser basierend auf den Daten zu der wenigstens einen spektralen Eigenschaft, die charakteristisch ist für das Gipskristallwasser.

2. System nach Anspruch 1, **dadurch gekennzeichnet, dass** die Messvorrichtung konfiguriert ist zum Bestimmen wenigstens einer der folgenden Eigenschaften der Bahn (10): Menge des Gipses, Anteil des Gipses, Menge des Gipskristallwassers, Anteil des Gipskristallwassers, Gewicht des mit Gipskristallwasser korrigierten Wassers, Anteil des freien Wassers, mit der Menge des Gipskristallwassers korrigiertes Trockengewicht, Anteil der mit dem Anteil des Gipskristallwassers korrigierten Trockenmasse.

3. System nach Anspruch 2, **dadurch gekennzeichnet, dass** die Messvorrichtung (204) weiterhin konfiguriert ist zum Bestimmen wenigstens eines der Folgenden: Menge einer gipshaltigen Beschichtung, Anteil der gipshaltigen Beschichtung basierend auf der gemessenen Eigenschaft.

4. System nach Anspruch 3, **dadurch gekennzeichnet, dass** die Messvorrichtung (204) außerdem konfiguriert ist zum Empfangen von Daten zu wenigstens einer spektralen Eigenschaft wenigstens eines Wellenlängenbands (614, 616, 618) der Nahinfrarotstrahlung, die mit dem Band (10) interagiert hat, wobei das wenigstens eine Wellenlängenband (614, 616, 618) von demjenigen des Gipskristallwassers abweicht, wobei die spektrale Eigenschaft charakteristisch für freies Wasser ist, und dass die Messvorrichtung (204) konfiguriert ist zum Verwenden der empfangenen Daten zu der wenigstens einen spektralen Eigenschaft des freien Wassers als einer Bezugseigenschaft.

5. System nach Anspruch 1, **dadurch gekennzeichnet, dass** die Messvorrichtung (204) auch konfiguriert ist zum Bestimmen wenigstens eines der Folgenden: Menge eines Füllers, Anteil des Füllers basierend auf der gemessenen Eigenschaft.

6. System nach Anspruch 1, **dadurch gekennzeichnet, dass** die Messvorrichtung (204) konfiguriert ist zum Bestimmen der wenigstens einen Eigenschaft der Bahn (10) basierend auf den in den Daten enthaltenen Spektralforminformationen.

7. System nach Anspruch 1, **dadurch gekennzeichnet, dass** die Messvorrichtung (204) konfiguriert ist zum Bestimmen der wenigstens einen Eigenschaft der Bahn (10) basierend auf den in den Daten enthaltenen Dämpfungsinformationen zu einer oder mehreren Wellenlängen der Nahinfrarotstrahlung.

8. System nach Anspruch 1, **dadurch gekennzeichnet, dass** die Messvorrichtung (204) konfiguriert ist zum Bestimmen der wenigstens einen Eigenschaft der Bahn (10) basierend auf den in den Daten enthaltenen Wellenlängeninformationen eines oder mehrerer vorbestimmter Dämpfungswerte der Nahinfrarotstrahlung.

9. System nach Anspruch 1, **dadurch gekennzeichnet, dass** die Messvorrichtung (204) konfiguriert ist zum Bestimmen der wenigstens einen Eigenschaft der Bahn (10) basierend auf den in den Daten enthaltenen Bandbreiteninformationen zu einem lokalen Absorptionsband der Nahinfrarotstrahlung.

10. Steuersystem für die Verwendung in einem Herstellungsprozess für eine gipshaltige Papier- oder Kartonbahn, **dadurch gekennzeichnet, dass** das Steuersystem eine Steuereinrichtung (126) und das optische Messsystem von Anspruch 1 umfasst, und
die Steuereinrichtung (126) konfiguriert ist zum Empfangen von Daten, von der Messvorrichtung (204), zu der bestimmten wenigstens einen Eigenschaft der Bahn (10) und zum Steuern des Herstellungsprozesses der Papier- oder Kartonbahn basierend auf der genannten Bahneigenschaft.

11. Messverfahren zum Messen einer Eigenschaft einer sich bewegenden gipshaltigen Papier- oder Kartonbahn, **dadurch gekennzeichnet, dass** das Verfahren umfasst:
Empfangen (800) von Daten zu wenigstens einer spektralen Eigenschaft wenigstens eines Wellenlängenbands einer Nahinfrarotstrahlung, die mit der Bahn (10) interagiert hat, wobei das wenigstens eine Wellenlängenband ein Absorptionsband eines freien Wassers ist und eine oder mehrere spektrale Eigenschaften aufweist, die charakteristisch für Gipskristallwasser sind und von denjenigen des freien Wassers abweichen,
Bestimmen (802) einer Eigenschaft der Bahn in Abhängigkeit von dem Gipskristallwasser basierend auf den Daten zu der wenigstens einen spektralen Eigenschaft, die für das Gipskristallwasser charakteristisch ist.

12. Verfahren nach Anspruch 11, **gekennzeichnet durch** das Bestimmen wenigstens einer der folgenden Eigenschaften der Bahn (10): Menge des Gipses, Anteil des Gipses, Menge des Gipskristallwassers, Anteil des Gipskristallwassers, Gewicht des mit Gipskristallwasser korrigierten Wassers, Anteil des freien Wassers, mit der Menge des Gipskristallwassers korrigiertes Trockengewicht, Anteil der mit dem Anteil des Gipskristallwassers korrigierten Trockenmasse.

13. Steuerverfahren für einen Herstellungsprozess für eine gipshaltige Papier- oder Kartonbahn, **dadurch gekennzeichnet, dass** das Steuerverfahren den Herstellungsprozess der Papier- oder Kartonbahn unter Verwendung des Steuersystems von Anspruch 10 steuert.

## Revendications

1. Système de mesure optique pour mesurer une propriété d'une bande de papier ou de carton contenant du gypse, le système comprenant une source (200) de rayonnement infrarouge, la source de rayonnement infrarouge étant configurée pour diriger un rayonnement infrarouge sur la bande (10) ; et au moins un détecteur (202), chaque détecteur étant configuré pour détecter un rayonnement proche infrarouge qui a interagi avec la bande (10) et provient de la source de rayonnement infrarouge (200) et pour générer des données correspondant à la détection,
**caractérisé en ce que** le système comprend en outre un dispositif de mesure (204) configuré
pour recevoir, depuis le au moins un détecteur, des données concernant au moins une propriété spectrale d'au moins une bande de longueur d'onde (610, 612) de rayonnement proche infrarouge qui a été en interaction avec la bande (10), la au moins une bande de longueur d'onde (510, 512, 654) étant une bande d'absorption d'eau libre et contenant une ou plusieurs propriétés spectrales caractéristiques de l'eau cristalline de gypse mais s'écartant de celles de l'eau libre; et
pour déterminer une propriété de la bande en fonction de l'eau cristalline de gypse, sur la base des données concernant la au moins une propriété spectrale caractéristique de l'eau cristalline de gypse.

2. Système selon la revendication 1, **caractérisé en ce que** le dispositif de mesure est configuré pour déterminer au moins l'une des propriétés suivantes de la bande (10) : quantité de gypse, proportion de gypse, quantité d'eau cristalline de gypse, proportion d'eau cristalline de gypse, poids d'eau corrigé avec de l'eau cristalline de gypse, proportion d'eau libre, poids sec corrigé avec la quantité d'eau cristalline de gypse, proportion de matière sèche corrigée avec la proportion d'eau cristalline de gypse.

3. Système selon la revendication 2, **caractérisé en ce que** le dispositif de mesure (204) est également configuré pour déterminer au moins l'une des valeurs suivantes : quantité de revêtement comprenant du gypse, proportion de revêtement comprenant du gypse sur la base de la propriété mesurée.

4. Système selon la revendication 3, **caractérisé en ce que** le dispositif de mesure (204) est de plus configuré pour recevoir des données concernant au moins une propriété spectrale d'au moins une bande de longueur d'onde (614, 616, 618) du rayonnement proche infrarouge qui a été en interaction avec la bande (10), la au moins une bande de longueur d'onde (614, 616, 618) s'écartant de celle de l'eau cristalline de gypse, ladite propriété spectrale étant caractéristique de l'eau libre, et le dispositif de mesure (204) étant configuré pour utiliser les données reçues concernant la au moins une propriété spectrale de l'eau libre comme propriété de référence.

5. Système selon la revendication 1, **caractérisé en ce que** le dispositif de mesure (204) est également configuré pour déterminer au moins l'une des valeurs suivantes : quantité d'une charge, proportion de la charge sur la base de la propriété mesurée.

6. Système selon la revendication 1, **caractérisé en ce que** le dispositif de mesure (204) est configuré pour déterminer la au moins une propriété de la bande (10) sur la base des informations de forme spectrale contenues dans les données.

7. Système selon la revendication 1, **caractérisé en ce que** le dispositif de mesure (204) est configuré pour déterminer la au moins une propriété de la bande (10) sur la base des informations d'atténuation concernant une ou plusieurs longueurs d'onde du rayonnement proche infrarouge contenues dans les données.

8. Système selon la revendication 1, **caractérisé en ce que** le dispositif de mesure (204) est configuré pour déterminer la au moins une propriété de la bande (10)) sur la base des informations de longueur d'onde d'une ou plusieurs valeurs d'atténuation prédéterminées du rayonnement proche infrarouge contenues dans les données.

9. Système selon la revendication 1, **caractérisé en ce que** le dispositif de mesure (204) est configuré pour déterminer la au moins une propriété de la bande (10) sur la base des informations de bande passante concernant une bande d'absorption locale de rayonnement proche infrarouge contenues dans les données.

10. Système de commande destiné à être utilisé dans un processus de fabrication de bande de papier ou de carton contenant du gypse, **caractérisé en ce que** le système de commande comprend un dispositif de commande (126) et le système de mesure optique selon la revendication 1, et
le dispositif de commande (126) est configuré pour recevoir des données depuis le dispositif de mesure (204) concernant la au moins une propriété déterminée de la bande (10) et pour commander le processus de fabrication de la bande de papier ou de carton sur la base de ladite propriété de bande.

11. Procédé de mesure pour mesurer une propriété d'une bande de papier ou de carton mobile contenant du gypse, **caractérisé en ce que** le procédé
reçoit (800) des données concernant au moins une propriété spectrale d'au moins une bande de longueur d'onde de rayonnement proche infrarouge qui a été en interaction avec la bande (10), la au moins une bande de longueur d'onde étant une bande d'absorption d'eau libre et contenant une ou plusieurs propriétés spectrales caractéristiques de l'eau cristalline de gypse mais s'écartant de celles de l'eau libre;
détermine (802) une propriété de la bande en fonction de l'eau cristalline de gypse, sur la base des données concernant la au moins une propriété spectrale caractéristique de l'eau cristalline de gypse.

12. Procédé selon la revendication 11, **caractérisé par** la détermination d'au moins l'une des propriétés suivantes de la bande (10) : quantité de gypse, proportion de gypse, quantité d'eau cristalline de gypse, proportion d'eau cristalline de gypse, poids d'eau corrigé avec l'eau cristalline de gypse, proportion d'eau libre, poids sec corrigé avec la quantité d'eau cristalline de gypse, proportion de matière sèche corrigée avec la proportion d'eau cristalline de gypse.

13. Procédé de commande pour un processus de fabrication d'une bande de papier ou de carton contenant du gypse, **caractérisé en ce que** le procédé de commande commande le processus de fabrication de la bande de papier ou de carton en utilisant le système de commande selon la revendication 10.
